# FASCICULE DE BREVET EUROPEEN

(11) **EP 0 487 385 B1**
(45) Date de publication et mention de la délivrance du brevet: **31.08.1994**
(21) Numéro de dépôt: 91403081.2
(22) Date de dépôt: 15.11.1991
(51) Int. Cl.: G09B 9/08

(54) **Dispositif de visualisation collimaté à miroir sphérique hors d'axe pour simulateur**
Kollimierte Anzeigvorrichtung mit einem aussen, axialen, sphärischen Spiegel für einen Simulator
Collimated display system with off-axis spherical mirror for simulator

(30) Priorité: 23.11.1990 FR 9014618
(43) Date de publication de la demande: 27.05.1992
(73) Titulaire: THOMSON-CSF, 75008 Paris (FR)
(72) Inventeur: Lacroix, Michel, F-92045 Paris la Défense (FR)
(74) Mandataire: Chaverneff, Vladimir

(56) Documents cités:
- EP-A- 0 461 942
- FR-A- 1 597 669
- FR-A- 2 009 084
- GB-A- 1 385 908
- US-A- 3 190 171
- US-A- 3 574 262
- US-A- 4 103 435
- US-A- 4 348 187

## Description

La présente invention se rapporte à un dispositif de visualisation collimaté à miroir sphérique hors d'axe pour simulateur.

Dans la plupart des dispositifs de visualisation collimatés à miroir sphérique hors d'axe à grand angle de visualisation, surtout dans le sens horizontal, l'image synthétique est projetée sur la face concave d'un écran dépoli qui est situé sur la sphère focale du miroir sphérique. Le rendement lumineux de l'écran est d'environ 30 à 40%, ce qui peut être considéré comme insuffisant pour obtenir des images visualisées contrastées et réalistes, en particulier dans le cas d'une visualisation très grand angle (au moins 180° dans le sens horizontal et plus de 40° dans le sens vertical) pour lequel la surface à éclairer est très importante.

On connaît des dispositifs de visualisation pour simulateur, où le rendement lumineux est meilleur, comme dans la publication US-A-4 348 187, mais le champ visuel, horizontal et vertical, est très limité. De plus, à cause de la configuration des éléments optiques, il est impossible d'agrandir le champ visuel horizontal.

On connaît aussi des dispositifs comme décrits dans la publication intercalaire (état de la technique selon Article 54(3) de la CBE) EP-A- 461 942 où l'écran à haut rendement pour la visualisation d'une zone d'intérêt est fixé sur le casque d'utilisateur de simulateur. Ces dispositifs connus sont associés à un écran sphérique pour avoir une visualisation très grand angle à faible définition et à plus faible rendement lumineux .

La présente invention a pour objet un dispositif de visualisation collimaté du type précité, dont le rendement lumineux soit nettement plus élevé que celui des dispositifs connus, sans pour autant le rendre plus onéreux.

Le dispositif de visualisation collimaté de l'invention est du type à dispositif de projection coopérant avec un miroir sphérique hors d'axe autour d'une cabine du simulateur et un écran sphérique situé sur la sphère focale du miroir, le dispositif de projection illuminant la face de l'écran qui est en vis-à-vis du miroir sphérique, cette face de l'écran étant avantageusement sa face convexe. Selon un mode de réalisation avantageux, le dispositif de projection est fixé à peu près au-dessus de l'observateur et éclaire un miroir auxiliaire disposé au-dessus du miroir sphérique. De façon avantageuse, le miroir auxiliaire est le prolongement du miroir sphérique .

La présente invention sera mieux comprise à la lecture de la description détaillée de plusieurs modes de réalisation, pris comme exemples non limitatifs, et illustrés par le dessin annexé, sur lequel :
- la figure 1 est un schéma simplifié d'un dispositif de visualisation de l'art antérieur ;
- la figure 2 est un schéma simplifié d'un dispositif de visualisation conforme à l'invention ;
- la figure 3 est un schéma d'un premier mode de réalisation d'un dispositif de visualisation conforme à l'invention, et
- les figures 4 et 5 sont des schémas, en vue de côté et en vue de dessus respectivement, d'un deuxième mode de réalisation d'un dispositif de visualisation conforme à l'invention.

L'invention est expliquée ci-dessous en référence à un simulateur d'avion civil, mais il est bien entendu qu'elle n'est pas limitée à une telle application, et peut être mise en oeuvre dans tout système de projection très grand angle, que ce soit un simulateur ou un appareil quelconque nécessitant un dispositif de projection.

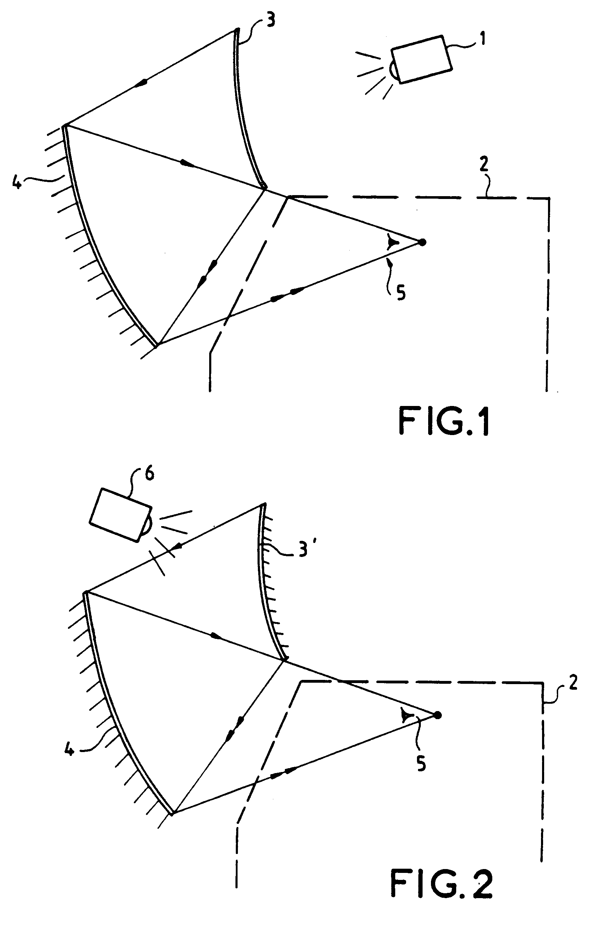

Le dispositif de visualisation sommairement représenté en figure 1 comporte un dispositif de projection 1, généralement du type à trois projecteurs, disposé sensiblement au-dessus de la cabine 2 dans laquelle prend place l'observateur utilisant le simulateur. Le dispositif de projection 1 illumine la face concave d'un écran sphérique 3 translucide diffusant. L'image formée sur la face convexe de l'écran 3 est renvoyée par le miroir 4 vers l'oeil 5 de l'observateur. Le rendement lumineux d'un tel dispositif est très faible du fait qu'une partie non négligeable du flux lumineux est renvoyée vers le dispositif de projection et que cet écran ne peut être rendu directif.

Le dispositif de l'invention, sommairement représenté en figure 2, permet d'augmenter nettement le rendement lumineux. Sur cette figure 2, les éléments similaires à ceux de la figure 1 sont affectés des mêmes références numériques. Selon l'invention, l'écran sphérique 3′ est opaque et réfléchissant du côté de sa face convexe (celle tournée vers le miroir 4). La face convexe de l'écran 3′ est illuminée par le dispositif de projection 6. Il n'est, bien entendu, pas impossible du point de vue optique de placer le dispositif de projection 1 en vis-à-vis de la face convexe de l'écran 3′, mais cela nécessiterait un support de fixation du dispositif de projection volumineux à long bras de levier au bout duquel serait fixée la masse importante du dispositif de projection (au moins plusieurs centaines de kg-Masse).

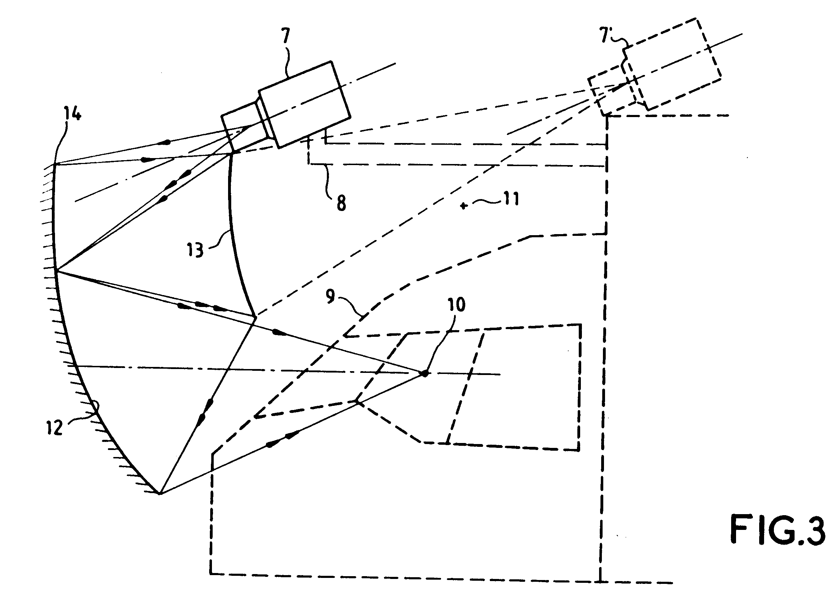

Selon un aspect avantageux de l'invention, le dispositif de projection est fixé au-dessus de la cabine, et illumine un miroir auxiliaire disposé au-dessus du miroir, ainsi que décrit ci-dessous en référence aux figures 3 à 5.

Etant donné que l'écran 3 est utilisé en réflecteur, qu'il réfléchit toujours les faisceaux lumineux du dispositif de projection vers le miroir sphérique 4, et que tous ces éléments sont fixes les uns par rapport aux autres, on utilise avantageusement un écran "à gain", c'est-à-dire un écran à direction de réflexion privilégiée, ce qui est surtout possible dans le cas d'un simulateur mono-utilisateur, et permet d'augmenter encore la luminosité du dispositif de visualisation.

On a représenté en figure 3 un premier mode de réalisation du dispositif de visualisation conforme à l'invention. Le dispositif de projection 7 est fixé sur un support 8, lui-même fixé sur la cabine 9 du simulateur, en position sensiblement symétrique de l'oeil 10 de l'utilisateur par rapport au centre 11 du miroir sphérique 12. L'écran sphérique 13 est disposé sous le dispositif de projection 7. On fixe un miroir cylindrique 14 ou sphérique ou plan juste au-dessus du miroir sphérique 12. Dans le cas où le miroir 14 est sphérique, il peut être avantageusement la continuation du miroir sphérique 12 de façon à renvoyer les faisceaux lumineux du dispositif de projection 7 vers l'écran 13, puis vers le miroir sphérique 12 et enfin vers l'oeil 10 de l'utilisateur.

Le dispositif de visualisation de la figure 3 nécessite de modifier l'optique du dispositif de projection 7 pour assurer la projection sur la face convexe de l'écran 13.

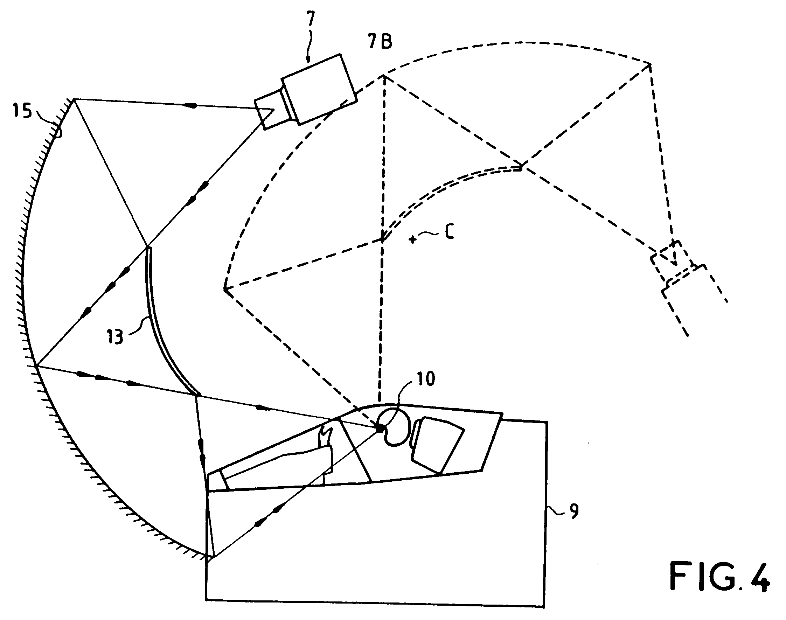

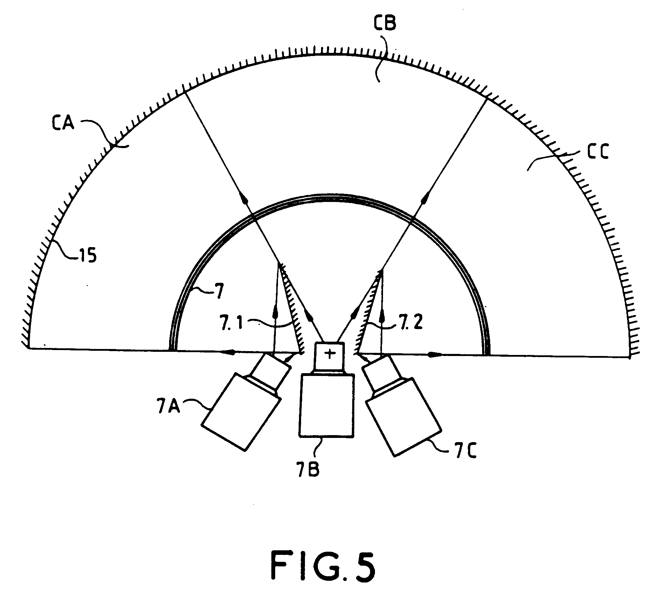

On a représenté en figures 4 et 5 un autre dispositif de visualisation conforme à l'invention. Les éléments similaires à ceux de la figure 3 sont affectés des mêmes références numériques. La principale différence réside dans le fait que le dispositif de projection 7 est fixé dans une position symétrique de l'oeil 10 de l'utilisateur par rapport au centre C du miroir sphérique 15. La partie supérieure du miroir 15 est directement illuminée par le dispositif de projection 7, alors que sa partie inférieure reçoit les faisceaux réfléchis par l'écran 13.

Le dispositif de projection 7 est réglé pour former une image à l'infini.

On a représenté en figure 4, en traits interrompus, la position extrême arrière du dispositif de visualisation ayant basculé autour d'un axe horizontal fictif, perpendiculaire au plan de la figure et passant par le point d'observation 10. Un tel basculement de tout le dispositif de visualisation permet d'augmenter le champ visuel vertical de l'utilisateur. Ce champ visuel vertical peut alors avoir une amplitude d'environ 130° (-40° à + 90° par rapport à un plan horizontal passant par le point d'observation 10). On peut également faire tourner l'ensemble du dispositif de visualisation autour d'un axe vertical fictif passant par le point 10. Le champ visuel horizontal peut alors avoir une amplitude d'environ 300°. Ces deux rotations de l'ensemble du dispositif de visualisation peuvent être asservies aux mouvements de la tête de l'utilisateur de façon connue en soi. On obtient ainsi une combinaison d'image collimatée et de zone d'intérêt asservie à la position de la tête de l'utilisateur ce qui est plus réaliste pour l'utilisateur qui a ainsi une impression de profondeur de l'image. Le dispositif de visualisation permet alors de présenter à un utilisateur tel qu'un pilote d'aéronef la quasi-totalité du champ visuel réel. Bien entendu, le dispositif de visualisation de la figure 3 peut également être entraîné en rotation verticale et/ou horizontale de la même façon que le dispositif de la figure 4.

Le dispositif de projection 7 peut être de tout type approprié, en particulier du type à trois projecteurs 7A, 7B, 7C comme représenté sur le dessin. Comme représenté en figure 5, on peut rapprocher les projecteurs extrêmes 7A, 7C du projecteur central 7B et utiliser des miroirs de renvoi 7. 1, 7. 2. Ces miroirs de renvoi sont disposés verticalement de façon que chaque projecteur illumine environ 1/3 du champ horizontal (champs horizontaux CA, CB, CC pour les projecteurs 7A, 7B, 7C respectivement. Ces projecteurs peuvent être des projecteurs LCD, des projecteurs à tube haute brillance, etc ...

Du fait que l'angle des rayons réfléchis par l'écran 13 est égal à leur angle d'incidence et si le simulateur est mono-observateur, l'écran 13 peut être du type à "grand gain", par exemple à revêtement métalique, ayant un gain en luminosité dans la direction de réflexion d'environ 3 à 5. Le diamètre de cet écran peut avantageusement être de l'ordre de 1, 25 m à 1, 5 m, son champ vertical d'environ 60 à 80°, et son champ horizontal d'environ 180° ou plus.

L'utilisation d'un écran à gain permet, par rapport à la solution de l'art antérieur à écran dépoli de multiplier la luminance de l'image vue par l'observateur par environ 9 à 15.

Le miroir 12 et 14, ou le miroir 15 peut avantageusement être réalisé en stratifié plastique composite, qui présente l'avantage d'être léger. Leur rayon peut être de l'ordre de 2,5 m à 3 m pour le miroir 15 et 3 m à 3,7 m pour les miroirs 12 et 14, et leur champ horizontal peut être de 180° et plus. Pour le miroir 12, le champ vertical peut être d'environ 40 à 50°, et le miroir cylindrique 14 présente un champ horizontal également d'environ 180°, et un champ vertical d'environ 20 à 25°. Dans le dispositif de la figure 4, le miroir 15 présente un champ vertical total d'environ 110 à 150° (à savoir, par rapport à un plan horizontal passant par le point d'observation 10), le champ vertical vu par l'observateur étant d'environ 60 à 80° (partie inférieure du miroir), et le champ vertical illuminé par le dispositif de projection 7 étant d'environ 60 à 80°. Cette augmentation du champ vertical est rendue possible grâce au fait que les rayons réfléchis par l'écran sphérique peuvent être fortement inclinés par rapport à la perpendiculaire à l'écran à leur point d'impact sur cet écran, sans perte appréciable de la luminosité de l'image vue par l'observateur. Dans le cas où il n'y a qu'un seul observateur, dont l'oeil est alors presque au centre du miroir sphérique, le champ vertical peut avoir les plus fortes valeurs mentionnées ci-dessus, car alors les erreurs de collimation et les "dipvergences" sont réduites par rapport à ce qu'elles sont dans un dispositif de visualisation grand angle classique à deux observateurs.

Bien entendu, l'optique des projecteurs doit être en mesure de corriger les aberrations de sphéricité et l'astigmatisme du miroir sphérique illuminé par le dispositif de projection disposé conformément à l'invention.

## Revendications

1. Dispositif de visualisation collimaté pour simulateur, du type à dispositif de projection coopérant avec un miroir sphérique hors d'axe autour d'une cabine du simulateur et un écran sphérique situé sur la sphère focale du miroir, le dispositif de projection (7) illuminant la face de l'écran (13) qui est en vis-à-vis du miroir (12, 15).

2. Dispositif selon la revendication 1, caractérisé par le fait que la face éclairée de l'écran est sa face convexe.

3. Dispositif selon la revendication 1 ou 2, caractérisé par le fait que l'écran est du type à "gain".

4. Dispositif selon l'une des revendications précédentes, caractérisé par le fait que le dispositif de projection est fixé à peu près au-dessus de l'observateur (10) et éclaire un miroir auxiliaire (14) disposé au-dessus du miroir sphérique .

5. Dispositif selon la revendication 4, caractérisé par le fait que le miroir auxiliaire est le prolongement du miroir sphérique (15).

6. Dispositif selon l'une des revendications précédentes, caractérisé par le fait qu'il est asservi aux mouvements de la tête de l'observateur.

7. Simulateur équipé du dispositif de visualisation selon l'une des revendications précédentes.

8. Dispositif selon la revendication 5, caractérisé par le fait que le dispositif de projection (7) est fixé dans une position symétrique de l'oeil (10) de l'observateur par rapport au centre C du miroir sphérique (15).

## Patentansprüche

1. Kollimierte Anzeigevorrichtung für einen Simulator, enthaltend eine Projektionsvorrichtung, die mit einem von der Achse abweichenden sphärischen Spiegel um eine Simulatorkabine herum sowie mit einem sphärischen Bildschirm zusammenwirkt, der auf der Fokuskugel des Spiegels angeordnet ist, wobei die Projektionsvorrichtung (7) die dem Spiegel (12, 15) gegenüberliegende Seite des Bildschirms (13) beleuchtet.

2. Vorrichtung nach Anspruch 1, gekennzeichnet durch die Tatsache, daß die beleuchtete Seite des Bildschirms seine konvexe Seite ist.

3. Vorrichtung nach Anspruch 1 oder 2, gekennzeichnet durch die Tatsache, daß der Bildschirm ein Bildschirm mit "Verstärkung" ist.

4. Vorrichtung nach einem der vorhergehenden Ansprüche, gekennzeichnet durch die Tatsache, daß die Projektionsvorrichtung ungefähr oberhalb des Beobachters (10) befestigt ist und einen oberhalb des sphärischen Spiegels angeordneten Hilfsspiegel (14) beleuchtet.

5. Vorrichtung nach Anspruch 4, gekennzeichnet durch die Tatsache, daß der Hilfsspiegel die Verlängerung des sphärischen Spiegels (15) ist.

6. Vorrichtung nach einem der vorhergehenden Ansprüche, gekennzeichnet durch die Tatsache, daß sie durch die Bewegungen des Kopfes des Beobachters gesteuert wird.

7. Simulator, der mit einer Anzeigevorrichtung nach einem der vorhergehenden Ansprüche versehen ist.

8. Vorrichtung nach Anspruch 5, gekennzeichnet durch die Tatsache, daß die Projektionsvorrichtung (7) in einer bezüglich des Mittelpunkts C des sphärischen Spiegels (15) zum Auge (10) des Beobachters symmetrischen Position befestigt ist.

## Claims

1. Collimated display device for simulator, of the type with projection device cooperating with an off-axis spherical mirror around a cockpit of the simulator and a spherical screen situated on the focal sphere of the mirror, the projection device (7) illuminating the face of the screen (13) which is towards the mirror (12, 15).

2. Device according to Claim 1, characterized in that the lit face of the screen is its convex face.

3. Device according to Claim 1 or 2, characterized in that the screen is of the type having "gain".

4. Device according to one of the preceding claims, characterized in that the projection device is fixed almost above the observer (10) and lights an auxiliary mirror (14) arranged above the spherical mirror.

5. Device according to Claim 4, characterized in that the auxiliary mirror is the prolongation of the spherical mirror (15).

6. Device according to one of the preceding claims, characterized in that it is governed by the movements of the head of the observer.

7. Simulator equipped with the display device according to one of the preceding claims.

8. Device according to Claim 5, characterized in that the projection device (7) is fixed in a position symmetrical with the eye (10) of the observer with respect to the centre C of the spherical mirror (15).
